# EUROPÄISCHE PATENTSCHRIFT

(11) **EP 0 470 647 B1**
(45) Veröffentlichungstag und Bekanntmachung des Hinweises auf die Patenterteilung: **20.09.1995**
(21) Anmeldenummer: 91114475.6
(22) Anmeldetag: 22.01.1986
(51) Int. Cl.: F16K 11/00, G05D 23/13

(54) **Sanitäre Mischbatterie mit Thermostatregelung**
Sanitary mixing valve with thermostatic regulation
Mitigeur sanitaire avec régulation thermostatique

(30) Priorität: 13.07.1985 DE 3525052
(43) Veröffentlichungstag der Anmeldung: 12.02.1992
(62) Teilanmeldung aus: 86100817.5
(73) Patentinhaber: IDEAL-STANDARD GMBH, D-53008 Bonn (DE)
(72) Erfinder: Bergman, Konrad, Dipl.-Ing. Dr.-Ing., W-5560 Wittlich (DE); Läller, Klaus, W-5309 Meckenheim-Merl (DE); Loose, Bernd, W-5580 Traben-Trarbach (DE)
(74) Vertreter: Gesthuysen, Hans Dieter, Dipl.-Ing.

(56) Entgegenhaltungen:
- DE-A- 1 949 318
- DE-A- 2 413 392
- DE-A- 2 804 755
- DE-A- 3 142 079
- US-A- 4 407 444
- US-A- 4 458 839

## Beschreibung

Die Erfindung bezieht sich auf eine sanitäre Mischbatterie in der Form eines Einzelthermostaten, mit einem Kaltwasserzulauf, einem Warmwasserzulauf und einem Mischwasserauslauf, mit einer feststehenden Ventilsitzscheibe und mit einer auf der Ventilsitzscheibe zur Mengensteuerung bewegbaren Ventilscheibe.

Derartige Mischbatterien sind z. B. aus der DE-A-28 04 755 bekannt. Bei dieser bekannten Mischbatterie, von der die Erfindung ausgeht, wirkt der Verstellmechanismus für die Absperrung und Mengensteuerung mit zwei Schließelementen zusammen, die zwei relativ zueinander verdrehbare aufeinanderliegende Steuerscheiben sind, die stirnseitig auf der Einlaufseite der Mischbatterie etwa koaxial zu deren Hauptachse angeordnet sind, wobei der Verstellmechanismus eine Hülse umfaßt, die koaxial zur Hauptachse verläuft, um diese verdrehbar ist und an einem Ende mit einer der Steuerscheiben in Drehverbindung steht. Bei dieser Mischbatterie erfolgt die Absperrung und Mengensteuerung mittels zweier keramischer Steuerscheiben. Derartige Steuerelemente sind bei sanitären Mischbatterien weit verbreitet, insbesondere bei sogenannten Einhebel-Mischbatterien.

Aus der US-A-4,407,444 ist eine sanitäre Mischbatterie mit Thermostatregelung bekannt, die einen Kaltwasserzulauf, einen Warmwasserzulauf und einen Mischwasserablauf aufweist. Weiterhin ist diese Mischbatterie versehen mit einer feststehenden Ventilsitzscheibe, mit einer auf der Ventilsitzscheibe zur Mengensteuerung drehbaren Ventilscheibe, mit einer relativ zur Ventilscheibe zur Temperaturregelung und -steuerung verschiebbaren Regelscheibe, mit einer oberhalb der Regelscheibe vorgesehenen Führung und mit einem auf die Regelscheibe einwirkenden temperaturabhängigen Regelelement. Dabei weist die Ventilsitzscheibe eine an den Kaltwasserzulauf angeschlossene Kaltwassereinlauföffnung und eine an den Warmwasserzulauf angeschlossene Warmwassereinlauföffnung auf, wobei die Ventilscheibe mit der Kaltwassereinlauföffnung und der Warmwassereinlauföffnung der Ventilsitzscheibe kommunizierende Durchtrittsöffnungen und die Regelscheibe mit den Durchtrittsöffnungen der Ventilscheibe kommunizierende Durchtrittsöffnungen aufweisen und die Regelscheibe relativ zur Ventilscheibe zur Temperatursteuerung in eine temperaturbestimmende Ausgangslage einstellbar und zur Temperaturregelung mittels des temperaturabhängigen Regelelements steuerbar ist.

Sowohl bei der aus der DE-A-28 04 755, als auch bei der aus der US-A-4,407,444 bekannten Mischbatterie erfolgt die Mengensteuerung über eine Drehbewegung der entsprechenden Ventilscheibe.

Sanitäre Mischbatterien mit einer Thermostatregelung bieten den Vorteil, daß die Regelung der Mischwassertemperatur entsprechend einem voreingestellten Wert selbsttätig erfolgt, und zwar unabhängig von den Vorlaufdrücken und Vorlauftemperaturen.

Die Thermostatregelung bei der vorbekannten Mischbatterie, von der die Erfindung ausgeht, zeigt einen üblichen konstruktiven Aufbau. Die inneren Wasserräume der Thermostatregelung sind in Form von Ringräumen gestaltet, die zwischen dem Mischbatteriegehäuse und darin vorgesehenen hülsen- und kolbenförmigen Steuer- und Regelelementen verlaufen, die einschließlich des Thermoelementes koaxial zur Hauptachse der Mischbatterie vorgesehen und unter Zwischenschaltung einer Vielzahl insbesondere dynamisch belasteter O-Ringe teilweise feststehend, teilweise drehbeweglich und teilweise längsbeweglich angeordnet sind. Die Absperrung und Mengensteuerung ist bei dieser bekannten Mischbatterie in üblicher Weise funktionell von der Thermostatregelung getrennt. Für die Benutzung der Mischbatterie sind in ebenfalls üblicher Weise zwei Betätigungsorgane vorgesehen, von denen eines für die Voreinstellung der Mischwassertemperatur bestimmt ist, während mit dem anderen Betätigungsorgan die Absperrung und Mengensteuerung erfolgt.

Mischbatterien dieser Art sind kompliziert und aufwendig in der Konstruktion sowie in der Herstellung. Ihre Funktionssicherheit läßt über längere Zeiträume zu wünschen übrig. Die Baumaße der bekannten Mischbatterie sind erheblich. Hinzu kommt, daß sie aufgrund ihrer komplizierten und aufwendigen Technik praktisch wenig geeignet sind, in der Form eines Eingriff-Einzelthermostaten ausgeführt werden zu können, obwohl Eingriff-Mischbatterien sich steigender Beliebtheit erfreuen, und zwar insbesondere solche Mischbatterien, die mit einem hebelförmigen Betätigungsorgan ausgerüstet sind, wie dies z. B. in der DE-A-15 50 060 offenbart ist. Ein Einhebel-Einzelthermostat mit einer herkömmlichen Technik für die Thermostatregelung sowie die Absperrung und Mengensteuerung ist in der DE-A-24 13 392 offenbart.

Der Erfindung liegt die Aufgabe zugrunde, eine sanitäre Mischbatterie der eingangs genannten Art zu schaffen, bei der ein neues Steuerungs- und Regelungskonzept verwirklichst ist und die darüber hinaus einfach im Aufbau und leicht herstellbar ist sowie deutlich geringere Abmaße aufweist.

Die erfindungsgemäße sanitäre Mischbatterie in der Form eines Einzelthermostaten, bei der die zuvor aufgezeigte Aufgabe gelöst ist, ist versehen mit einem Kaltwasserzulauf, einem Warmwasserzulauf und einem Mischwasserauslauf, mit einer feststehenden Ventilsitzscheibe, mit einer auf der Ventilsitzscheibe zur Mengensteuerung verschiebbaren Ventilscheibe, mit einem relativ zur Ventilscheibe zur Temperatursteuerung und -regelung verschiebbaren Regelkolben, mit einer oberhalb des Regelkolbens vorgesehenen Führungsscheibe und mit einem auf den Regelkolben einwirkenden temperaturabhängigen Regelelement, wobei die Ventilsitzscheibe eine an den Kaltwasserzulauf angeschlossene Kaltwassereinlauföffnung und eine an den Warmwasserzulauf angeschlossene Warmwassereinlauföffnung aufweist, die Ventilscheibe mit der Kaltwassereinlauföffnung und der Warmwassereinlauföffnung der Ventilsitzscheibe kommunizierende Durchtrittsöffnungen aufweist und der Regelkolben relativ zur Ventilscheibe zur Temperatursteuerung in eine temperaturbestimmende Ausgangslage einstellbar und zur Temperaturregelung mittels des temperaturabhängigen Regelelements steuerbar ist, wobei die Ventilscheibe, der Regelkolben und die Führungsscheibe zu einem Paket zusammengefaßt sind und eine auf der Ventilsitzscheibe verschiebliche Baueinheit bilden und wobei die Thermostatregelung und die Absperrung und Mengeneinsteuerung geradlinig auf parallel zueinander verlaufenden Bewegungsachsen erfolgen.

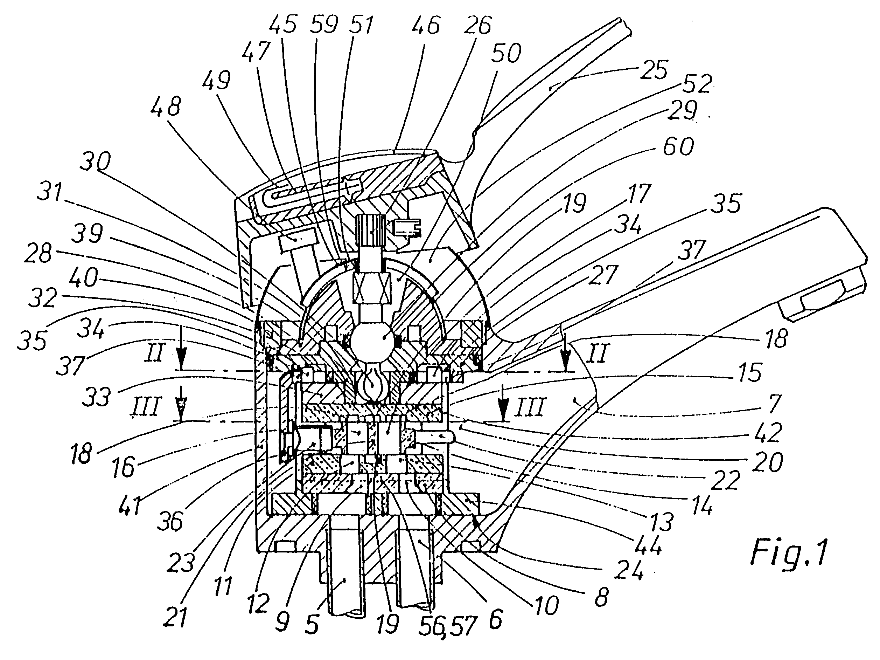

Es gibt nun eine Vielzahl von Möglichkeiten, die erfindungsgemäße Mischbatterie auszugestalten und weiterzubilden, was in weiteren Ansprüchen gekennzeichnet ist und im folgenden anhand einer lediglich ein Ausführungsbeispiel darstellenden Zeichnung weiter erläutert wird; es zeigen
- Fig. 1: eine sanitäre Mischbatterie in der Form einer Waschtischbatterie im Längsschnitt,

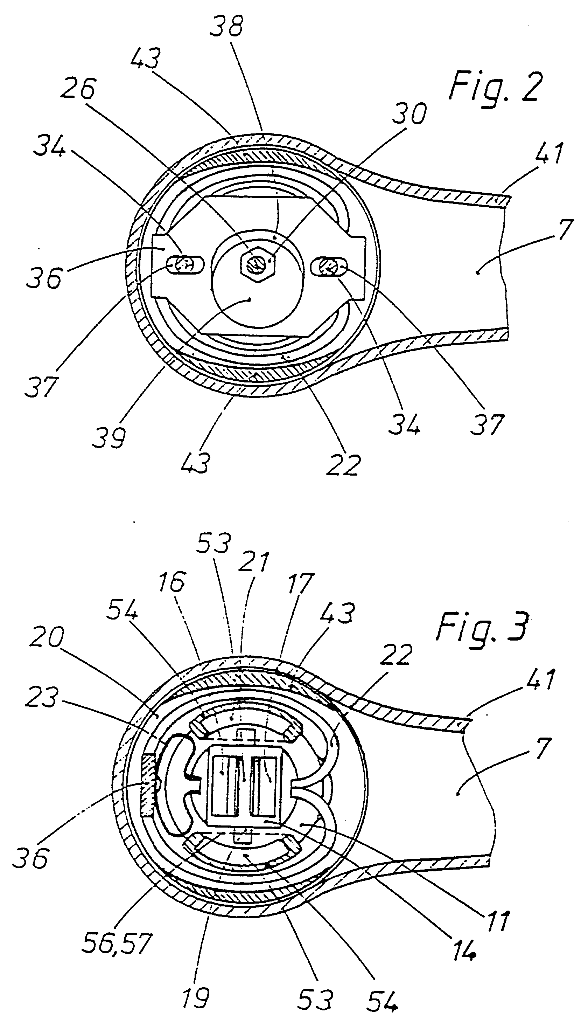

- Fig. 2: einen Schnitt gemäß der Linie II-II der Fig. 1,
- Fig. 3: einen Schnitt gemäß der Linie III-III der Fig. 1 und

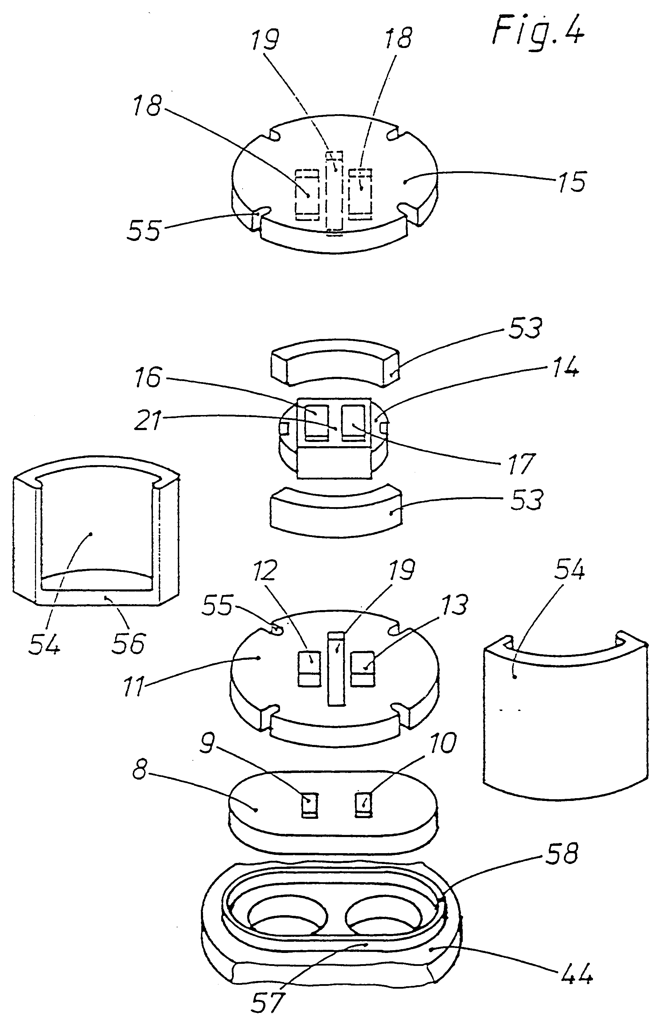

- Fig. 4: eine Explosionszeichnung.

Die gezeigte Waschtischbatterie ist in der Form eines Einzelthermostaten ausgeführt, d. h., daß die Thermostatregelung sowie die Absperrung und Mengensteuerung vereinigt sind bzw. an der Verbrauchsstelle erfolgen. Die Mischbatterie ist mit einem Kaltwasserzulauf 5 und einem Warmwasserzulauf 6 versehen sowie mit einem Mischwasserauslauf 7. In Strömungsrichtung befinden sich vor der Thermostatregelung Steuerelemente 8, 11 für die Absperrung und Mengensteuerung, von denen das Steuerelement 8 als feststehende Ventilsitzscheibe ausgebildet ist und Einlauföffnungen 9, 10 für das kalte und warme Wasser aufweist, die auf der einen Seite an den Kalt- und Warmwasserzulauf 5, 6 angeschlossen und auf der anderen Seite gegen eine zweite Scheibe 11 gerichtet sind. Die Scheibe 11 ist als bewegliche Ventilscheibe ausgebildet, auf der Ventilsitzscheibe 8 verschieblich und weist mit den Einlauföffnungen 9, 10 der Ventilsitzscheibe 8 kommunizierende Durchtrittsöffnungen 12, 13 auf. Die Ventilscheibe 11 dient als untere Führungsscheibe für einen Regelkolben 14, der im einzelnen als solcher nicht dargestellt ist. Der Regelkolben 14 ist mit einem geringen Paßspiel zwischen der unteren Führungsscheibe 11 und einer oberen Führungsscheibe 15 verschieblich und mit Durchtrittsöffnungen 16, 17 für kaltes und warmes Wasser versehen. Die Durchtrittsöffnungen 16, 17 kommunizieren auf der einen Seite mit den Durchtrittsöffnungen 12, 13 der unteren Führungsscheibe 11 und auf der anderen Seite mit in der oberen Führungsscheibe 15 vorgesehenen Ausnehmungen 18, deren Querschnitte entsprechend den Querschnitten der Durchtrittsöffnungen 12, 13 der unteren Führungsscheibe 11 ausgelegt sind und die Druckausgleichskammern für Teilmengen des kalten und warmen Wassers bilden, welches von den Durchtrittsöffnungen 12, 13 der unteren Führungsscheibe 11, den Ausnehmungen 18 der oberen Führungsscheibe 15 und von je einer weiteren Ausnehmung 19 in der unteren und oberen Führungsscheibe 11, 15 in einen Wasserraum 20 strömen. Die Ausnehmungen 18, 19 bilden bei dem gezeigten Ausführungsbeispiel mit dem Wasserraum 20 verbundene Abströmkammern, von denen die Ausnehmungen 19 mit einem die Durchtrittsöffnungen 16, 17 voneinander trennenden Steg 21 des Regelkolbens 14 zusammenwirken. Die Ausnehmungen 19 sind in ihrer Längenausdehnung größer als der Durchmesser des Regelkolbens 14. Die Ausnehmungen könnten auch als voll durchlaufende Vertiefungen ausgebildet sein. Denkbar sind aber auch Ausführungen, bei denen keine oder nur einzelne Ausnehmungen mit dem Wasserraum 20 in Verbindung stehen. In diesem Fall würden die nicht mit dem Wasserraum 20 in Verbindung stehenden Ausnehmungen druckausgeglichene Kammern oder Druckausgleichskammern bilden mit einer Länge, die kleiner wäre als der Durchmesser des Regelkolbens 14. Man könnte also wahlweise nur bestimmte der möglichen Wasserwege unter Wahrung des hydrostatischen Gleichgewichts benutzen. Es ist denkbar, nur je einen mit dem Wasserraum 20 verbundenen Kalt- und Warmwasserweg in der Thermostatregelung vorzusehen und z. B. nur eine oder zwei entsprechend dimensionierte Druckausgleichskammern in der Form einer bzw. zweier Ausnehmungen. Sowohl diese Ausführung als auch Ausführungen, bei denen die Ausnehmungen als voll durchlaufende Vertiefungen ausgebildet sind, würden besonders kleine Baumaße ermöglichen.

In dem Wasserraum 20 befindet sich ein bogenförmiges Regelelement 22, welches aus einem Bimetall besteht und an ein Ende des Regelelementes 14 angreift, während das andere Ende des Regelkolbens 14 in Richtung des Regelelementes 22 durch eine Rückholfeder 23 belastet ist. Derartige Federn sind immer dann erforderlich, wenn das Regelelement mit dem Regelkolben nicht fest verbunden ist. Ferner sind Federn auch immer dann erforderlich, wenn der Regelkolben, wie dies bei hülsen- oder kolbenförmigen Regelelementen üblich ist, mit Ventilsitzen in Form von Festanschlägen zusammenwirken. In diesem Fall dienen die Federn als überhubfedern. Dies bedeutet, daß beim vorliegenden Anmeldungsgegenstand in jedem Fall auf eine Überhubfeder verzichtet werden kann und auf die Rückholfeder 23 dann, wenn man das Regelelement 22 mit dem einen Ende des Regelkolbens 14 fest verbindet. Bei den bisher bekannten Mischbatterien mit einer Thermostatregelung sind häufig mindestens zwei Federn erforderlich.

Die Rückholfeder 23 bildet zusammen mit dem Regelkolben 14, dem Regelelement 22 sowie mit den beiden Führungsscheiben 11, 15 eine Funktions- und Baueinheit, welche auf der Ventilsitzscheibe 8 für die Absperrung und Mengenregelung verschieblich ist. Die Ventilscheibe bzw. die untere Führungsscheibe 11 ist also gleichzeitig Funktionsteil der baueinheitlichen Thermostatregelung. Sie kommuniziert unmittelbar mit den inneren Wasserwegen der Thermostatregelung und dient gleichzeitig als unteres Lager für den Regelkolben 14, dessen Bewegung parallel zu der Ventilscheibe verläuft, die ferner gleichzeitig einen Teil des Gehäuses der Thermostatregelung bildet.

Die Thermostatregelung und die Absperrung und Mengensteuerung sind zu einer in der Mischbatterie auswechselbar gehaltenen Kartusche baulich vereinigte und innerhalb eines Gehäuses 24 angeordnet, welches also auch das Regelelement 22 umgibt.

Die gezeigte Mischbatterie ist als Eingriff-Mischbatterie mit einem hebelförmigen Betätigungsorgan 25 ausgebildet, welches dreh- und kippbar ist und an dem ein Steuerhebel 26 befestigt ist, über den mittels der Drehbewegung des Betätigungsorgans 25 die Thermostatregelung bzw. die Mischwassertemperatur voreinstellbar ist und mittels der Kippbewegung die Absperrung und Mengensteuerung erfolgt.

Der Steuerhebel 26 ist in einem die Mischbatterie dicht verschließenden, aus einem Ober- und Unterteil 28 bzw. 27 bestehenden Deckel gelagert und weist für die Lagerung in seinem mittleren Bereich ein Kugelelement 29 auf, während das untere Ende 30 des Steuerhebels 26 in einer Buchse 31 lagert, die in einer Öffnung 32 einer an dem Deckel 27, 28 anliegenden und relativ zu dem Deckel 27, 28 geradlinig verschieblichen Trägerplatte 33 drehbar gehalten ist, welche mit der die Ventilscheibe bzw. die untere Führungsscheibe 11 beinhaltenden, eine Funktions- und Baueinheit bildenden Thermostatregelung fest verbunden ist. Das untere Ende 30 des Steuerhebels 26 ist im Achsnormalschnitt sechskantig gestaltet. Es könnte aber auch walzenförmig sein.

Die Trägerplatte 33 ist über Vorsprünge 34 in länglichen Ausnehmungen 35 des Unterteils 27 des Deckels 27, 28 geführt, an dem ein die Trägerplatte 33 übergreifender Bügel 36 anliegt, der geradlinig verschieblich ist und zu seiner Führung Langlöcher 37 für den Durchtritt der Vorsprünge 34 aufweist und eine mittlere Öffnung 38 für die Aufnahme eines zwischen der Trägerplatte 33 sowie dem Deckel 27, 28 gehaltenen Flansches 39 der Buchse 31. Der Flansch 39 ist im Verhältnis zur Längsachse der Buchse 31 außermittig angeordnet. Er bildet einen kreisförmigen Exzenter, mittels welchem der Bügel 36 relativ zur Ventilscheibe 11 verschieblich ist. Der Bügel 36 greift über das Regelelement 22 und die Rückholfeder 23 an den Regelkolben 14 an. Das Regelelement 22 sowie die Rückholfeder 23 sind an einem Ende des Bügels 36 befestigt.

Die Thermostatregelung und die Absperrung und Mengeneinsteuerung erfolgen nach alledem geradlinig auf parallel zueinander verlaufenden Bewegungsachsen.

Der Deckel 27, 28 bildet gleichzeitig einen Bestandteil des kartuschenartigen Gehäuses 24, welches aus Kunststoff besteht und mittels eines Schraubringes 40 in dem Mischbatteriekörper 41 befestigt ist. Das Gehäuse 24 umfaßt eine mit Durchtrittsöffnungen 42 für das Wasser versehene Hülse 43, welche sowohl mit dem Deckel 27, 28 als auch mit einem Boden 44 verschweißt ist.

Der Regelkolben 14, dessen Lager 11, 15 sowie die Ventilsitzscheibe 8 bestehen aus einem keramischen Material, vorzugsweise aus Aluminiumoxid. Die einander zugewandten Flächen sind poliert. Für diese Teile könnte jedoch auch ein thermoplastischer oder duroplastischer Kunststoff Verwendung finden mit einem hohen Anteil eines mineralischen Füllmaterials. Ein solcher Kunststoff ist spröde, schwindungsarm, kalkabweisend und er quillt nicht. Die einander zugewandten Flächen des Regelkolbens 14 des Lagers 11, 15 und der Ventilsitzscheibe 8 könnten ferner aus einer Kunststoffbeschichtung gebildet sein, vorzugsweise aus Polytetrafluoräthylen.

Um zu verhindern, daß in das Lager 29 des Steuerhebels 26 und über dieses Lager Schmutz in die Mischbatterie eindringen kann, durchdringt der Steuerhebel 26 in seinem Bereich oberhalb des Deckels 27, 28 eine Abdeckkappe 45, die den Steuerhebel 26 dicht umschließt, dessen Lager 29 abdeckt und mit dem Steuerhebel 26 kippbar ist. Verschmutzungsgefahren, welche die Funktion der Thermostatregelung gefährden könnten, bestehen nicht, da sich bei plötzlichen Temperaturänderungen und entsprechenden Verstellungen des Regelkolbens 14 stark vergrößerte Regelspalte ergeben, so daß selbst größere Schmutzpartikel ausgespült werden können.

Auf dem Betätigungsorgan 25 befindet sich unter einer kappenförmigen Klarsichtabdeckung 46 eine Temperaturskala 47, welche mit dem Betätigungsorgan 25 unter einem als Gegenmarkierung dienenden und durch einen Trockenmagneten 48 in seiner Position festgehaltenen Zeiger 49 drehbar ist. Der Trockenmagnet 48 kann an dem Deckel 27, 28 gehalten sein. Er ist aber vorzugsweise, wie gezeigt, an der Abdeckkappe 45 gehalten, die ihrerseits mit einer den Steuerhebel 26 im oberen Bereich umgebenden Buchse 51 einstückig ausgebildet, drehfest angeordnet und mit dem Steuerhebel 26 entsprechend der seitlichen Ausdehnung der Öffnung 50 kippbar ist. Für die drehfeste Anordnung der Buchse 51 und damit der Abdeckkappe 45 ist bei dem dargestellten Ausführungsbeispiel an der Abdeckkappe 45 eine Führungsrippe 59 vorgesehen, die in eine Führungsrille 60 des Deckels 27, 28 eingreift.

Die Temperaturskala kann sich auch auf dem Mischbatteriekörper 41 oder auf einer Abdeckrosette 52 befinden, die zwischen dem Mischbatteriekörper 41 und dem Betätigungsorgan 25 vorgesehen ist, welches die Gegenmarkierung aufweisen könnte. Die Temperaturskala kann natürlich auch auf dem Betätigungsorgan 25 vorgesehen sein, während der Mischbatteriekörper 41 oder die Abdeckrosette 52 mit der Gegenmarkierung vesehen sind.

Außerdem könnte sich am Betätigungsorgan 25 eine elektronische Anzeige befinden, welche die Winkelstellung des Betätigungsorgans 25 in einen Temperatursollwert umwandelt und digital anzeigt.

Wie bereits erwähnt, ist die dargestellte und beschriebene Ausführung nur ein Beispiel zur Verwirklichung der Erfindung, und diese ist nicht darauf beschränkt, vielmehr sind im Rahmen des erfindungsgemäßen Grundgedankens insbesondere hinsichtlich der Gestaltung und Anordnung der einzelnen Teile auch noch andere Möglichkeiten gegeben. In diesem Zusammenhang ist zunächst festzustellen, daß der Anmeldungsgegenstand für die unterschiedlichsten Typen von sanitären Mischbatterien Verwendung finden kann, also auch für Küchenbatterien, Bidetbatterien, Wannenfüll- und Brausebatterien, für Unterputz- und Aufputzausführungen. Ferner könnte die Ventilscheibe 11 mit der oberen Führungsscheibe 15 und Distanzstükken 53 einstückig ausgebildet sein. Bei dem gezeigten Ausführungsbeispiel sind die Distanzstücke 53 zwischen der unteren und oberen Führungsscheibe 11, 15 durch Kunststoffklammern 54 in ihrer Position gesichert, welche auch als Montagehilfen dienen und in Ausnehmungen 55 der unteren und oberen Führungsscheibe 11, 15 eingreifen. Die Klammern 54 durchgreifen die Ausnehmungen 55 der oberen Führungsscheibe 15 und sind mit der Trägerplatte 33 durch Verschweißen fest verbunden. Die Klammern 54 durchgreifen ferner auch die Ausnehmungen 55 der unteren Führungsscheibe bzw. der Ventilscheibe 11 und weisen unten geradlinige Führungsflächen 56 auf für die Funktions- und Baueinheit und die Absperrung der Mengensteuerung, wobei die Führungsflächen 56 mit entsprechenden Führungsflächen 57 am Boden 44 des kartuschenartigen Gehäuses 24 zusammenwirken. Die Führungsflächen 57 sind an einer umlaufenden, die Ventilsitzscheibe 8 dicht umschließenden Rippe 58 ausgebildet, welche gleichzeitig die Ventilsitzscheibe 8 gegen Verdrehen sichert. Die Führungsflächen 56, 57 können Teil einer Schwalbenschwanzführung sein.

Das Anwendungsgebiet ist nicht auf den Sanitärbereich beschränkt, insbesondere dann nicht, wenn für Steuer- und Regelelemente Aluminiumoxid zum Einsatz kommt, welches mit diversen Medien kompatibel ist. Es versteht sich schließlich von selbst, daß der Anmeldungsgegenstand auch in der Form einer Zweigriff-Mischbatterie ausgeführt sein kann.

## Patentansprüche

1. Sänitäre Mischbatterie in der Form eines Einzelthermostaten, mit einem Kaltwasserzulauf (5), einem Warmwasserzulauf (6) und einem Mischwasserauslauf (7), mit einer feststehenden Ventilsitzscheibe (8), mit einer auf der Ventilsitzscheibe (8) zur Mengensteuerung verschiebbaren Ventilscheibe (11), mit einem relativ zur Ventilscheibe (11) zur Temperatursteuerung und -regelung verschiebbaren Regelkolben (14), mit einer oberhalb des Regelkolbens (14) vorgesehenen Führungsscheibe (15) und mit einem auf den Regelkolben (14) einwirkenden temperaturabhängigen Regelelement (22), wobei die Ventilsitzscheibe (8) eine an den Kaltwasserzulauf (5) angeschlossene Kaltwassereinlauföffnung (9) und eine an den Warmwasserzulauf (6) angeschlossene Warmwassereinlauföffnung (10) aufweist, die Ventilscheibe (11) mit der Kaltwassereinlauföffnung (9) und der Warmwassereinlauföffnung (10) der Ventilsitzscheibe (8) kommunizierende Durchtrittsöffnungen (12, 13) aufweist und der Regelkolben (14) relativ zur Ventilscheibe (11) zur Temperatursteuerung in eine temperaturbestimmende Ausgangslage einstellbar und zur Temperaturregelung mittels des temperaturabhängigen Regelelements (22) steuerbar ist, wobei die Ventilscheibe (11), der Regelkolben (14) und die Führungsscheibe (15) zu einem Paket zusammengefaßt sind und eine auf der Ventilsitzscheibe (8) verschiebliche Baueinheit bilden und wobei die Thermostatregelung und die Absperrung und Mengeneinsteuerung geradlinig auf parallel zueinander verlaufenden Bewegungsachsen erfolgen.

2. Sanitäre Mischbatterie nach Anspruch 1, dadurch gekennzeichnet, daß die Ventilscheibe (11) direkt oder indirekt mindestens teilweise das Lager für den Regelkolben (14) der Thermostatregelung bildet.

3. Sanitäre Mischbatterie nach Anspruch 1 oder 2, dadurch gekennzeichnet, daß die Ventilscheibe (11) mit den inneren Wasserwegen der Thermostatregelung unmittelbar kommuniziert.

4. Sanitäre Mischbatterie nach einem der Ansprüche 1 bis 3, dadurch gekennzeichnet, daß die Ventilscheibe (11) als untere Führungsscheibe für den Regelkolben (14) dient, welcher mit einem geringen Paßspiel zwischen der unteren Führungsscheibe (11) und einer oberen Führungsscheibe (15) verschieblich ist und Durchtrittsöffnungen (16, 17) für kaltes und warmes Wasser aufweist, die auf der einen Seite mit den Durchtrittsöffnungen (12, 13) der unteren Führungsscheibe (11) und auf der anderen Seite mit in der oberen Führungsscheibe (15) vorgesehenen Ausnehmungen (18) kommunizieren, deren Querschnitte entsprechend den Querschnitten der Durchtrittsöffnungen (12, 13) der unteren Führungsscheibe (11) ausgelegt sind und die Druckausgleichskammern für Teilmengen des kalten und warmen Wassers bilden, welches von den Durchtrittsöffnungen (12, 13) der unteren Führungsscheibe (11) und ggf. den Ausnehmungen (18, 19) der oberen Führungsscheibe (15) in einen Wasserraum (20) strömt, in dem sich das Regelelement (22) befindet, welches vom Wasser umströmt ist und an ein Ende des Regelkolbens (14) angreift, während das andere Ende des Regelkolbens (14) erforderlichenfalls in Richtung des Regelelementes (22) durch eine Rückholfeder (23) belastet ist, die zusammen mit dem Regelkolben (14), dem Regelelement (22), der unteren Führungsscheibe (11) und der oberen Führungsscheibe (15) die Funktions- und Baueinheit bildet, welche auf dem Ventilsitz (8) für die Absperrung und Mengensteuerung durch ein Betätigungsorgan (25) verschieblich und dessen Regelkolben (14) zusammen mit dem Regelelement (22) und der Rückstellfeder (23) durch das Betätigungsorgan (25) oder ein separates Betätigungsorgan zwecks Voreinstellung der Temperatur relativ zu der unteren und oberen Führungsscheibe (11, 15) verschieblich ist.

5. Sanitäre Mischbatterie nach Anspruch 4, dadurch gekennzeichnet, daß die Durchtrittsöffnungen (16, 17) des Regelkolbens (14) durch mindestens einen Steg (21) voneinander getrennt sind, der mit druckausgeglichenen Kammern (19) in Form von Ausnehmungen der unteren und oberen Führungsscheibe (11, 15) für Teilmengen des kalten und warmen Wassers zusammenwirkt.

6. Sanitäre Mischbatterie nach Anspruch 5, dadurch gekennzeichnet, daß die Kammern (19) alle oder teilweise mit dem Wasserraum (20) verbunden sind und Abströmkammern bilden.

7. Sanitäre Mischbatterie nach einem der Ansprüche 1 bis 6, dadurch gekennzeichnet, daß wahlweise nur bestimmte der möglichen inneren Wasserwege der Thermostatregelung vorgesehen sind unter Wahrung des hydrostatischen Gleichgewichts.

8. Sanitäre Mischbatterie nach einem der Ansprüche 1 bis 7, dadurch gekennzeichnet, daß die Ventilscheibe (11) ganz oder teilweise als Gehäuse der Thermostatregelung ausgebildet ist.

9. Sanitäre Mischbatterie nach einem der Ansprüche 1 bis 8, dadurch gekennzeichnet, daß die Thermostatregelung und die Absperrung und Mengensteuerung zu einer in der Mischbatterie auswechselbar gehaltenen Kartusche baulich vereinigt sind.

10. Sanitäre Mischbatterie nach Anspruch 9, dadurch gekennzeichnet, daß die Thermostatregelung und die Absperrung und Mengensteuerung in einem kartuschenartigen Gehäuse (24) angeordnet sind.

11. Sanitäre Mischbatterie nach einem der Ansprüche 1 bis 10, dadurch gekennzeichnet, daß sie als Eingriff-Mischbatterie ausgebildet ist und ein dreh- und kippbares Betätigungsorgan (25) aufweist, an dem ein Steuerhebel (26) befestigt ist, über den sowohl die Thermostatregelung voreinstellbar als auch die Absperrung und Mengensteuerung betätigbar ist.

12. Sanitäre Mischbatterie nach einem der Ansprüche 1 bis 11, dadurch gekennzeichnet, daß sie als Eingriff-Mischbatterie mit einem hebelförmigen Betätigungsorgan (25) ausgebildet ist.

13. Sanitäre Mischbatterie nach einem der Ansprüche 1 bis 12, dadurch gekennzeichnet, daß der Steuerhebel (26) in einem die Mischbatterie dicht verschließenden, aus einem Ober- und Unterteil (28, 27) bestehenden Deckel gelagert ist und für die Lagerung in seinem mittleren Bereich ein Kugelelement (29) aufweist, während das untere Ende (30) des Steuerhebels (26) in einer Buchse (31) lagert, die in einer Öffnung (32) einer an dem Deckel (27, 28) anliegenden und relativ zu dem Deckel (27, 28) geradlinig verschieblichen Trägerplatte (33) drehbar gehalten ist, welche mit der die Ventilscheibe (11) beinhaltenden und auf der Ventilscheibe (8) verschieblichen baueinheitlichen Thermostatregelung fest verbunden ist.

14. Sanitäre Mischbatterie nach Anspruch 13, dadurch gekennzeichnet, daß das untere Ende (30) des Steuerhebels (26) quer zu dessen Längsachse walzenförmig ist.

15. Sanitäre Mischbatterie nach Anspruch 13, dadurch gekennzeichnet, daß das untere Ende (30) des Steuerhebels (26) im Achsnormalschnitt mehrkantig ist.

16. Sanitäre Mischbatterie nach Anspruch 15, dadurch gekennzeichnet, daß das untere Ende (30) des Steuerhebels sechskantig ist.

17. Sanitäre Mischbatterie nach einem der Ansprüche 1 bis 16, dadurch gekennzeichnet, daß die Trägerplatte (33) über Vorsprünge (34) in länglichen Ausnehmungen (35) des Deckels (27, 28) geführt ist, an dem ein die Trägerplatte (33) übergreifender Bügel (36) anliegt und geradlinig verschieblich ist, welcher zu seiner Führung Langlöcher (37) für den Durchtritt der Vorsprünge (34) der Trägerplatte (33) aufweist und eine mittlere Öffnung (38) für die Aufnahme eines zwischen der Trägerplatte (33) sowie dem Deckel (27, 28) gehaltenen Flansches (39) der Buchse (31), der im Verhältnis zur Längsachse der Buchse (31) außermittig angeordnet ist und einem kreisförmigen Exzenter bildet, mittels welchem der Bügel (36) relativ zur Ventilscheibe (11) verschieblich ist, der über das Regelelement (22) und die Rückholfeder (23) an dem Regelkolben (14) angreift.

18. Sanitäre Mischbatterie nach einem der Ansprüche 1 bis 17, dadurch gekennzeichnet, daß der Deckel (27, 28) gleichzeitig Bestandteil des kartuschenartigen Gehäuses (24) ist.

19. Sanitäre Mischbatterie nach einem der Ansprüche 1 bis 18, dadurch gekennzeichnet, daß der Deckel (27, 28) und damit das kartuschenartige Gehäuse (24) mittels eines Schraubrings (40) in dem Mischbatteriekörper (41) befestigt sind.

20. Sanitäre Mischbatterie nach einem der Ansprüche 1 bis 19, dadurch gekennzeichnet, daß das kartuschenartige Gehäuse (24) eine mit Durchtrittsöffnungen (42) für das Wasser versehene Hülse (43) aufweist, welche sowohl mit dem Unterteil (27) des Deckels (27, 28) als auch mit einem Boden (44) verbunden ist.

21. Sanitäre Mischbatterie nach Anspruch 20, dadurch gekennzeichnet, daß das kartuschenartige Gehäuse (24) aus miteinander verschweißten Teilen aus Kunststoff besteht.

22. Sanitäre Mischbatterie nach einem der Ansprüche 1 bis 21, dadurch gekennzeichnet, daß das Regelelement (22) bogenförmig gestaltet ist.

23. Sanitäre Mischbatterie nach Anspruch 22, dadurch gekennzeichnet, daß das Regelelement (22) das kartuschenartige Gehäuse (24) ganz oder teilweise umgibt.

24. Sanitäre Mischbatterie nach Anspruch 22, dadurch gekennzeichnet, daß das Regelelement (22) in dem kartuschenartigen Gehäuse (24) vorgesehen ist.

25. Sanitäre Mischbatterie nach einem der Ansprüche 1 bis 24, dadurch gekennzeichnet, daß das Regelelement (22) ein Bimetall ist.

26. Sanitäre Mischbatterie nach einem der Ansprüche 1 bis 25, dadurch gekennzeichnet, daß der Regelkolben (14), dessen Lager (11, 53, 15) sowie der Ventilsitz (8) aus einem keramischen Material bestehen.

27. Sanitäre Mischbatterie nach Anspruch 26, dadurch gekennzeichnet, daß der Regelkolben (14), dessen Lager (11, 53, 15) sowie der Ventilsitz (8) aus Aluminiumoxid bestehen.

28. Sanitäre Mischbatterie nach einem der Ansprüche 1 bis 27, dadurch gekennzeichnet, daß der Regelkolben (14), dessen Lager (11, 53, 15) sowie der Ventilsitz (8) aus einem hochgefüllten thermoplastischen oder duroplastischen Kunststoff bestehen.

29. Sanitäre Mischbatterie nach Anspruch 28, dadurch gekennzeichnet, daß das Füllmaterial mineralisch ist.

30. Sanitäre Mischbatterie nach einem der Ansprüche 1 bis 29, dadurch gekennzeichnet, daß sich auf dem Betätigungsorgan (25) unter einer kappenförmigen Klarsichtabdeckung (46) eine Temperaturskala (47) befindet, welche mit dem Betätigungsorgan (25) unter einem als Gegenmarkierung dienenden und durch einen Trockenmagneten (48) in seiner Position festgehaltenen Zeiger (49) drehbar ist.

31. Sanitäre Mischbatterie nach Anspruch 30, dadurch gekennzeichnet, daß der Trockenmagnet (48) an dem Deckel (28) gehalten ist.

32. Sanitäre Mischbatterie nach Anspruch 30, dadurch gekennzeichnet, daß der Steuerhebel (26) in seinem oberen Bereich von einer den Trockenmagneten (48) tragenden Buchse (51) umgeben ist, die an dem Deckel (27, 28) drehfest gehalten und mit dem Steuerhebel (26) kippbar ist.

33. Sanitäre Mischbatterie nach Anspruch 32, dadurch gekennzeichnet, daß die Buchse (51) in der Öffnung (50) des Deckels (27, 28) für den Durchtritt des Steuerhebels (26) drehfest gehalten ist.

34. Sanitäre Mischbatterie nach einem der Ansprüche 1 bis 33, dadurch gekennzeichnet, daß sich die Temperaturskala auf dem Mischbatteriekörper (41) oder auf einer Abdeckrosette (52) befindet, die zwischen dem Mischbatteriekörper (41) und dem Betätigungsorgan (25) vorgesehen ist, welches die Gegenmarkierung aufweist.

35. Sanitäre Mischbatterie nach einem der Ansprüche 1 bis 34, dadurch gekennzeichnet, daß sich die Temperaturskala auf dem Betätigungsorgan (25) befindet und die Gegenmarkierung auf dem Mischbatteriekörper (41) oder der Abdeckrosette (52).

36. Sanitäre Mischbatterie nach einem der Ansprüche 1 bis 35, dadurch gekennzeichnet, daß der Ventilsitz (8) aus einer Scheibe besteht.

37. Sanitäre Mischbatterie nach einem der Ansprüche 1 bis 36 dadurch gekennzeichnet, daß sich am Betätigungsorgan (25) eine elektronische Anzeige befindet, welche die Winkelstellung des Betätigungsorgans (25) in einen Temperatursollwert umwandelt und digital anzeigt.

38. Sanitäre Mischbatterie nach einem der Ansprüche 1 bis 37, dadurch gekennzeichnet, daß der Steuerhebel (26) in seinem Bereich oberhalb des Deckels (27, 28) eine Abdeckkappe (45) durchdringt, die an dem Steuerhebel (26) befestigt ist, diesen dicht umschließt, mindestens dessen Lager (29) abdeckt und mit dem Steuerhebel (26) mindestens kippbar ist.

39. Sanitäre Mischbatterie nach Anspruch 38, dadurch gekennzeichnet, daß die Abdeckkappe (45) den Trockenmagneten (48) trägt.

40. Sanitäre Mischbatterie nach Anspruch 38 oder 39, dadurch gekennzeichnet, daß die Abdeckkappe (45) drehfest angeordnet und hierfür mit einer Führungsrippe (59) versehen ist, die in eine Führungsrille (60) des Deckels (27, 28) eingreift.

41. Sanitäre Mischbatterie nach einem der Ansprüche 1 bis 40, dadurch gekennzeichnet, daß die Abdeckkappe (45) mit der Buchse (51) einstückig ausgebildet ist.

42. Sanitäre Mischbatterie nach einem der Ansprüche 1 bis 41, dadurch gekennzeichnet, daß die einander zugewandten Flächen zwischen dem Regelkolben (14) dem Lager (11, 53, 15) sowie dem Ventilsitz (8) kunststoffbeschichtet sind.

43. Sanitäre Mischbatterie nach Anspruch 42, dadurch gekennzeichnet, daß die Flächen mit Polytetrafluoräthylen beschichtet sind.

44. Sanitäre Mischbatterie nach einem der Ansprüche 1 bis 43, dadurch gekennzeichnet, daß die untere und obere Führungsscheibe (11, 15) mit Ausnehmungen (55) versehen sind, in die Klammern (54) eingreifen, welche Distanzstücke (53) zwischen der unteren und oberen Führungsscheibe (11, 15) in ihrer Position sichern.

45. Sanitäre Mischbatterie nach Anspruch 44, dadurch gekennzeichnet, daß die Klammern (54) aus Kunststoff bestehen.

46. Sanitäre Mischbatterie nach Anspruch 44 oder 45, dadurch gekennzeichnet, daß die Klammern (54) die Ausnehmungen (55) der oberen Führungsscheibe (15) durchgreifen und mit der Trägerplatte (33) fest verbunden sind.

47. Sanitäre Mischbatterie nach einem der Ansprüche 1 bis 46, dadurch gekennzeichnet, daß die Klammern (54) die Ausnehmungen (55) der unteren Führungsscheibe bzw. der Ventilscheibe (11) durchgreifen und unten geradlinige Führungsflächen (56) für die Funktions- und Baueinheit der Thermostatregelung und die Absperrung und Mengensteuerung aufweisen, wobei die Führungsflächen (56) mit entsprechenden Führungsflächen (57) am Boden (44) des kartuschenartigen Gehäuses (24) zusammenwirken.

48. Sanitäre Mischbatterie nach einem der Ansprüche 1 bis 47, dadurch gekennzeichnet, daß die Führungsflächen (57) an einer umlaufenden, die Ventilsitzscheibe (8) dicht umschließenden Rippe (58) ausgebildet sind, welche gleichzeitig die Ventilsitzscheibe (8) gegen Verdrehen sichert.

49. Sanitäre Mischbatterie nach einem der Ansprüche 1 bis 48, dadurch gekennzeichnet, daß die Führungsflächen (56, 57) Teil einer Schwalbenschwanzführung sind.

50. Sanitäre Mischbatterie nach einem der Ansprüche 1 bis 49, dadurch gekennzeichnet, daß die Ventilscheibe bzw. die untere Führungsscheibe (11) mit den Distanzstücken (53) und der oberen Führungsscheibe (15) einstückig ausgebildet ist.

## Claims

1. A sanitary mixer tap in the form of an individual thermostat, having a cold water supply (5), a hot water supply (6) and a mixed water discharge (7), having a fixed valve seat disc (8), having a valve disc (11) which is displaceable on the valve seat disc (8) for quantitative control, having a regulating piston (14) which is displaceable in relation to the valve disc (11) for temperature control and regulation, having a guide disc (15) provided above the regulating piston (14) and having a temperature-dependent regulating element (22) acting on the regulating piston (14), wherein the valve seat disc (8) has a cold water inlet opening (9) connected to the cold water supply (5) and a hot water inlet opening (10) connected to the hot water supply (6), the valve disc (11) has passageway openings (12, 13) communicating with the cold water inlet opening (9) and the hot water inlet opening (10) of the valve disc (8), and the regulating piston (14) can be set in a temperature-determining initial position in relation to the valve disc (11) for temperature control, and can be controlled by means of the temperature-dependent regulating element (22) for temperature regulation, wherein the valve disc (11), the regulating piston (14) and the guide disc (15) are assembled to form a stack and form a structural unit which is displaceable on the valve seat disc (8), and wherein thermostat regulation and shut-off and quantitative control of admission are effected rectilinearly on axes of movement extending parallel to each other.

2. A sanitary mixer tap according to claim 1, characterised in that the valve disc (11) directly or indirectly at least partially forms the bearing for the regulating piston (14) of the thermostat regulating system.

3. A sanitary mixer tap according to claim 1 or 2, characterised in that the valve disc (11) communicates directly with the internal water passages of the thermostat regulating system.

4. A sanitary mixer tap according to any one of claims 1 to 3, characterised in that the valve disc (11) serves as a lower guide disc for the regulating piston (14), which is displaceable with a slight fitting clearance between the lower guide disc (11) and an upper guide disc (15), and which has passageway openings (16, 17) for cold and hot water which communicate on one side with the passageway openings (12, 13) of the lower guide disc (11) and on the other side with recesses (18) provided in the upper guide disc (15), the cross-sections of which recesses are designed corresponding to the cross-sections of the passageway openings (12, 13) of the lower guide disc (11) and which form pressure equalisation chambers for partial amounts of the cold and hot water which flows from the passageway openings (12, 13) of the lower guide disc (11) and optionally from the recesses (18, 19) of the upper guide disc (15) into a water space (20), in which the regulating element (22) is situated around which water flows and which acts on one end of the regulating piston (14), whilst the other end of the regulating piston (14) is biassed if necessary towards the regulating element (22) by a restoring spring (23), which together with the regulating piston (14), the regulating element (22), the lower guide disc (11) and the upper guide disc (15) forms the functional and structural unit which can be displaced on the valve seat (8) by an operating element (25) for shut-off and quantitative control, and the regulating piston (14) of which, together with the regulating element (22) and the restoring spring (23), can be displaced in relation to the lower and upper guide discs (11, 15) by the operating element (25) or by a separate operating element for the purpose of presetting the temperature.

5. A sanitary mixer tap according to claim 4, characterised in that the passageway openings (16, 17) of the regulating piston (14) are separated from each other by at least one bridge (21), which cooperates with pressure-equalized chambers (19) for partial amounts of the cold and hot water in the form of recesses in the lower and upper guide discs (11, 15).

6. A sanitary mixer tap according to claim 5, characterised in that the chambers (19) are all or in part connected to the water space (20) and form discharge chambers.

7. A sanitary mixer tap according to any one of claims 1 to 6, characterised in that only certain of the possible internal water passages of the thermostat regulating system are provided according to choice, whilst maintaining hydrostatic equilibrium.

8. A sanitary mixer tap according to any one of claims 1 to 7, characterised in that the valve disc (11) is completely or partially constructed as a housing of the thermostat regulating system.

9. A sanitary mixer tap according to any one of claims 1 to 8, characterised in that the thermostat regulating system and the shut-off and quantitative control means are structurally combined to form a cartridge which is replaceably mounted in the mixer tap.

10. A sanitary mixer tap according to claim 9, characterised in that the thermostat regulating system and the shut-off and quantitative control means are disposed in a cartridge-like housing (24).

11. A sanitary mixer tap according to any one of claims 1 to 10, characterised in that it is constructed as a single-handle mixer tap and has a rotatable and tiltable operating element (25) to which a control lever (26) is fixed, via which both the thermostat regulation can be preset and the shut-off and quantitative control means can be operated.

12. A sanitary mixer tap according to any one of claims 1 to 11, characterised in that it is constructed as a single-handle mixer tap with a lever-shaped operating element (25).

13. A sanitary mixer tap according to any one of claims 1 to 12, characterised in that the control lever (26) is mounted in a cover consisting of an upper and a lower part (28, 27) which imperviously seals the mixer tap, which control lever has a ball element (29) in its central region for its bearing arrangement, whilst the lower end (30) of the control lever (26) is mounted in a bush (31) which is rotatably mounted in an opening (32) in a support plate (33) which is seated against the cover (27, 28) and which is rectilinearly displaceable in relation to the cover (27, 28), which support plate is rigidly attached to the thermostat regulation means constructed as a structural unit which contains the valve disc (11) and which is displaceable on the valve disc (8).

14. A sanitary mixer tap according to claim 13, characterised in that the lower end (30) of the control lever (26) is formed as a cylinder transverse to its longitudinal axis.

15. A sanitary mixer tap according to claim 13, characterised in that the lower end (30) of the control lever (26) is polygonal in section normal to its axis.

16. A sanitary mixer tap according to claim 15, characterised in that the lower end (30) of the control lever is hexagonal.

17. A sanitary mixer tap according to any one of claims 1 to 16, characterised in that the support plate (33) is guided via projections (34) in oblong recesses (35) in the cover (27, 28), against which a yoke (36) which engages above the support plate (33) is seated, which yoke is rectilinearly displaceable and has elongated holes (37), for its guidance, for the passage of the projections (34) of the support plate (33) and has a central opening (38) for receiving a flange (39) of the bush (31) held between the support plate (33) and the cover (27, 28), which flange is disposed off-centre in relation to the longitudinal axis of the bush (31) and forms a circular eccentric by means of which the yoke (36), which acts on the regulating piston (14) via the regulating element (22) and the restoring spring (23), can be displaced in relation to the valve disc (11).

18. A sanitary mixer tap according to any one of claims 1 to 17, characterised in that the cover (27, 28) is at the same time a component of the cartridge-like housing (24).

19. A sanitary mixer tap according to any one of claims 1 to 18, characterised in that the cover (27, 28), and with it the cartridge-like housing (24) are fixed within the mixer tap body (41) by means of a threaded ring (40).

20. A sanitary mixer tap according to any one of claims 1 to 19, characterised in that the cartridge-like housing (24) has a sleeve (43) provided with passageway openings (42) for the water, which sleeve is joined both to the lower part (27) of the cover (27, 28) and to a base (44).

21. A sanitary mixer tap according to claim 20, characterised in that the cartridge-like housing (24) consists of parts made of plastics and welded to each other.

22. A sanitary mixer tap according to any one of claims 1 to 21, characterised in that the regulating element (22) is of arcuate form.

23. A sanitary mixer tap according to claim 22, characterised in that the regulating element (22) completely or partially surrounds the cartridge-like housing (24).

24. A sanitary mixer tap according to claim 22, characterised in that the regulating element (22) is provided in the cartridge-like housing (24).

25. A sanitary mixer tap according to any one of claims 1 to 24, characterised in that the regulating element (22) is bimetallic.

26. A sanitary mixer tap according to any one of claims 1 to 25, characterised in that the regulating piston (14), its bearings (11, 53, 15) and the valve seat (8) consist of a ceramic material.

27. A sanitary mixer tap according to claim 26, characterised in that the regulating piston (14), its bearings (11, 53, 15) and the valve seat (8) consist of alumina.

28. A sanitary mixer tap according to any one of claims 1 to 27, characterised in that the regulating piston (14), its bearings (11, 53, 15) and the valve seat (8) consist of a highly filled thermoplastics or thermosetting plastics.

29. A sanitary mixer tap according to claim 28, characterised in that the filler material is a mineral.

30. A sanitary mixer tap according to any one of claims 1 to 29, characterised in that a temperature scale (47) is located on the operating element (25) under a cap-like see-through cover (46), and is rotatable with the operating element (25) under a pointer (49) which serves as a reference mark and which is fixed in its position by a dry magnet (48).

31. A sanitary mixer tap according to claim 30, characterised in that the dry magnet (48) is mounted on the cover (28).

32. A sanitary mixer tap according to claim 30, characterised in that the upper region of the control lever (26) is surrounded by a bush (51) carrying the dry magnet (48), which bush is mounted rotationally fixed to the cover (27, 28) and can be tilted with the control lever (26).

33. A sanitary mixer tap according claim 32, characterised in that the bush (51) is mounted rotationally fixed in the opening (50) in the cover (27, 28) for the passage of the control lever (26).

34. A sanitary mixer tap according to any one of claims 1 to 33, characterised in that the temperature scale is situated on the mixer tap body (41) or on a cover rosette (52) which is provided between the mixer tap body (41) and the operating element (25) which carries the reference mark.

35. A sanitary mixer tap according to any one of claims 1 to 34, characterised in that the temperature scale is situated on the operating element (25) and the reference mark is situated on the mixer tap body (41) or on the cover rosette (52).

36. A sanitary mixer tap according to any one of claims 1 to 35, characterised in that the valve seat (8) consists of a disc.

37. A sanitary mixer tap according to any one of claims 1 to 36 characterised in that an electronic display, which converts the angular position of the operating element (25) into a desired temperature value and displays the latter digitally, is situated on the operating element (25).

38. A sanitary mixer tap according to any one of claims 1 to 37, characterised in that the region of the control lever (26) above the cover (27, 28) passes through a cover cap (45) which is fixed to the control lever (26), impermeably surrounds the latter and covers at least the bearing (29) thereof, and which can at least be tilted with the control lever (26).

39. A sanitary mixer tap according to claim 38, characterised in that the cover cap (45) carries the dry magnet (48).

40. A sanitary mixer tap according to claim 38 or 39, characterised in that the cover cap (45) is disposed rotationally fixed and for this purpose is provided with a guide rib (59) which engages in a guide channel (60) in the cover (27, 28).

41. A sanitary mixer tap according to any one of claims 1 to 40, characterised in that the cover cap (45) is constructed in one piece with the bush (51).

42. A sanitary mixer tap according to any one of claims 1 to 41, characterised in that the mutually facing faces between the regulating piston (14), the bearing (11, 53, 15) and the valve seat (8) are plastics-coated.

43. A sanitary mixer tap according to claim 42, characterised in that the faces are coated with polytetrafluoroethylene.

44. A sanitary mixer tap according to any one of claims 1 to 43, characterised in that the lower and upper guide discs (11, 15) are provided with recesses (55) in which clips (54) engage which secure distance pieces (53) in their position between the lower and upper guide discs (11, 15).

45. A sanitary mixer tap according to claim 44, characterised in that the clips (54) consist of plastics.

46. A sanitary mixer tap according to claims 44 or 45, characterised in that the clips (54) fit through the recesses (55) in the upper guide disc (15) and are rigidly attached to the support plate (33).

47. A sanitary mixer tap according to any one of claims 1 to 46, characterised in that the clips (54) fit through the recesses (55) of the lower guide disc or of the valve disc (11) and have rectilinear guide faces (56) below for the functional and structural unit of the thermostat regulating system and the shut-off and quantitative control means, wherein the guide faces (56) cooperate with corresponding guide faces (57) on the base (44) of the cartridge-like housing (24).

48. A sanitary mixer tap according to any one of claims 1 to 47, characterised in that the guide faces (57) are constructed on an encircling rib (58) which imperviously surrounds the valve seat disc (8) and which at the same time secures the valve seat disc (8) against rotation.

49. A sanitary mixer tap according to any one of claims 1 to 48, characterised in that the guide faces (56, 57) are part of a dovetail guide.

50. A sanitary mixer tap according to any one of claims 1 to 49, characterised in that the valve disc or lower guide disc (11) is formed in one piece with the distance pieces (53) and the upper guide disc (15).

## Revendications

1. Mélangeur d'évier sanitaire sous la forme d'un thermostat individuel, comprenant une alimentation en eau froide (5), une alimentation en eau chaude (6) et une sortie pour l'eau mixte (7), un disque de siège de soupape fixe (8), un disque de soupape (11) apte à se déplacer sur le disque de siège de soupape (8) pour la commande du débit, une tige de réglage apte à se déplacer par rapport au disque de soupape (11) à des fins de commande et de réglage de la température, un disque de guidage (15) prévu au-dessus de la tige de réglage (14) et un élément de réglage (22) dépendant de la température agissant sur la tige de réglage (14), dans lequel le disque de siège de soupape (8) présente une ouverture d'entrée (9) pour l'eau froide raccordée à l'alimentation en eau froide (5) et une ouverture d'entrée (10) pour l'eau chaude raccordée à l'alimentation en eau chaude (6), le disque de soupape (11) présentant des ouvertures de passage (12, 13) communiquant avec l'ouverture d'entrée (9) pour l'eau froide et avec l'ouverture d'entrée (10) pour l'eau chaude du disque de siège de soupape (8), la tige de réglage (14) pouvant être réglée par rapport au disque de soupape (11) dans une position de départ déterminant la température, à des fins de commande de la température, et pouvant être commandée au moyen de l'élément de réglage (22) dépendant de la température à des fins de réglage de la température, dans lequel le disque de soupape (11), la tige de réglage (14) et le disque de guidage (15) sont rassemblés en un paquet et forment une unité de montage apte à se déplacer sur le disque de siège de soupape (8), et dans lequel le réglage thermostatique et la commande de l'arrêt et du débit ont lieu en en direction rectiligne sur des axes de mouvement s'étendant parallèlement l'un à l'autre.

2. Mélangeur d'évier sanitaire selon la revendication 1, caractérisé en ce que le disque de soupape (11) forme directement ou indirectement, au moins en partie, le palier pour la tige de réglage (14) du dispositif de réglage thermostatique.

3. Mélangeur d'évier sanitaire selon la revendication 1 ou 2, caractérisé en ce que le disque de soupape (11) communique directement avec les voies internes pour l'eau du dispositif de réglage thermostatique.

4. Mélangeur d'évier sanitaire selon l'une quelconque des revendications 1 à 3, caractérisé en ce que le disque de soupape (11) fait office de disque de guidage inférieur pour la tige de réglage (14) qui peut se déplacer avec un jeu d'ajustage minime entre le disque de guidage inférieur (11) et un disque supérieur de guidage (15), et présente des ouvertures de passage (16, 17) pour l'eau froide et pour l'eau chaude, qui communiquent, d'un côté, avec les ouvertures de passage (12, 13) du disque de guidage inférieur (11) et, de l'autre côté, avec des évidements (18) prévus dans le disque de guidage supérieur (15) dont les sections transversales sont dimensionnées pour correspondre aux sections transversales des ouvertures de passage (12, 13) du disque inférieur de guidage (11) et qui forment des chambres de compensation de pression pour des quantités partielles de l'eau froide et de l'eau chaude qui s'écoulent à partir des ouvertures de passage (12, 13) du disque de guidage inférieur (11) et éventuellement des évidements (18, 19) pratiqués dans le disque de guidage supérieur (15) dans un espace (20) réservé à l'eau, dans lequel se trouve l'élément de réglage (22) qui est entouré par l'eau et qui vient s'appliquer contre une extrémité de la tige de réglage (14), tandis que l'autre extrémité de la tige de réglage (14) est nécessairement chargée par un ressort de rappel (23) en direction de l'élément de réglage (22), qui forme, conjointement avec la tige de réglage (14), l'élément de réglage (22), le disque inférieur de guidage (11) et le disque supérieur de guidage (15), l'unité de fonctionnement et de construction qui peut se déplacer sur le siège de soupape (8) pour la commande de l'arrêt et du débit à l'intervention d'un organe de commande (26), et dont la tige de réglage (14) peut se déplacer conjointement avec l'élément de réglage (22) et le ressort de rappel (23) à l'intervention de l'organe de commande (25) ou d'un organe de commande séparé à des fins de réglage préalable de la température, par rapport aux disques de guidage inférieur et supérieur (11, 15).

5. Mélangeur d'évier sanitaire selon la revendication 4, caractérisé en ce que les ouvertures de passage (16, 17) de la tige de réglage (14) sont séparées l'une de l'autre par au moins une nervure (21) qui coopère avec des chambres (19) dans lesquelles a eu lieu une compensation de pression sous la forme d'évidements pratiqués dans les disques de guidage inférieur et supérieur (11, 15) pour des quantités partielles de l'eau froide et de l'eau chaude.

6. Mélangeur d'évier sanitaire selon la revendication 5, caractérisé en ce que les chambres (19) sont reliées, en tout ou en partie, à l'espace (20) réservé à l'eau et forment des chambres d'écoulement.

7. Mélangeur d'évier sanitaire selon l'une quelconque des revendications 1 à 6, caractérisé en ce que, si on le souhaite, on ne prévoit que certaines voies internes pour l'eau du dispositif de réglage thermostatique parmi celles qui sont possibles, tout en conservant l'équilibre hydrostatique.

8. Mélangeur d'évier sanitaire selon l'une quelconque des revendications 1 à 7, caractérisé en ce que le disque de soupape (11) est réalisé, en tout ou en partie, sous forme de logement du dispositif de réglage thermostatique.

9. Mélangeur d'évier sanitaire selon l'une quelconque des revendications 1 à 8, caractérisé en ce que le dispositif de réglage thermostatique, ainsi que la commande de l'arrêt et du débit sont combinés, quant à leur construction, en une cartouche logée dans le mélangeur d'évier de manière à pouvoir être remplacés.

10. Mélangeur d'évier sanitaire selon la revendication 9, caractérisé en ce que le dispositif de réglage thermostatique et la commande de l'arrêt et du débit sont disposés dans un logement (24) en forme de cartouche.

11. Mélangeur d'évier sanitaire selon l'une quelconque des revendications 1 à 10, caractérisé en ce qu'il est réalisé en forme de mélangeur d'évier à poignée unique et en ce qu'il présence un organe de commande (25) rotatif et basculable, sur lequel est fixé un levier de commande (26) à l'intervention duquel on peut aussi bien régler au préalable le dispositif de réglage thermostatique que commander le dispositif de commande de l'arrêt et du débit.

12. Mélangeur d'évier sanitaire selon l'une quelconque des revendications 1 à 11, caractérisé en ce qu'il est réalisé sous forme d'un mélangeur d'évier à poignée unique comprenant un organe de commande (25) en forme de levier.

13. Mélangeur d'évier sanitaire selon l'une quelconque des revendications 1 à 12, caractérisé en ce que le levier de commande (26) est monté dans un couvercle constitué par une partie supérieure et par une partie inférieure (28, 27) fermant de manière étanche le mélangeur d'évier et qui présente, pour le placement des paliers, un élément de bille (29) dans sa zone médiane, tandis que l'extrémité inférieure (30) du levier de commande (26) vient se loger dans une douille (31) qui est maintenue en rotation dans une ouverture (32) pratiquée dans une plaque de support (33) adjacente au couvercle (27, 28) et apte à se déplacer en direction rectiligne par rapport au couvercle (27, 28), qui est reliée à demeure au dispositif de réglage thermostatique de construction homogène, contenant le disque de soupape (11) et apte à se déplacer sur le disque de soupape (8).

14. Mélangeur d'évier sanitaire selon la revendication 13, caractérisé en ce que l'extrémité inférieure (30) du levier de commande (26) est de forme cylindrique en position transversale par rapport à son axe longitudinal.

15. Mélangeur d'évier sanitaire selon la revendication 13, caractérisé en ce que l'extrémité inférieure (30) du levier de commande (26) est polygonale en section normale axiale.

16. Mélangeur d'évier sanitaire selon la revendication 15, caractérisé en ce que l'extrémité inférieure (30) du levier de commande est hexagonale.

17. Mélangeur d'évier sanitaire selon l'une quelconque des revendications 1 à 16, caractérisé en ce que la plaque de support (33) est guidée, à l'intervention de saillies (34), dans des évidements oblongs (35) pratiqués dans le couvercle (27, 28), contre lequel vient se disposer un étrier (36) surplombant la plaque de support (33), tout en étant apte à se déplacer en direction rectiligne, qui présente des trous oblongs (37) pour son guidage, destinés au passage des saillies (34) de la plaque de support (33), ainsi qu'une ouverture médiane (38) pour que vienne s'y loger une bride (39) de la douille (31), maintenue entre la plaque de support (33) et le couvercle (27, 28), qui est disposée en position excentrique par rapport à l'axe longitudinal de la douille (31) et qui forme un excentrique circulaire au moyen duquel l'étrier (36) peut se déplacer par rapport au disque de soupape (11) qui vient s'appliquer contre la tige de réglage (14) à l'intervention de l'élément de réglage (22) et du ressort de rappel (23).

18. Mélangeur d'évier sanitaire selon l'une quelconque des revendications 1 à 17, caractérisé en ce que le couvercle (27, 28) représente simultanément un constituant du logement (24) en forme de cartouche.

19. Mélangeur d'évier sanitaire selon l'une quelconque des revendications 1 à 18, caractérisé en ce que le couvercle (27, 28), partant le logement (24) en forme de cartouche sont fixés dans le corps (41) du mélangeur d'évier au moyen d'un anneau fileté (40).

20. Mélangeur d'évier sanitaire selon l'une quelconque des revendications 1 à 19, caractérisé en ce que le logement (24) en forme de cartouche présente un manchon (43) muni d'ouvertures de passage (42) pour l'eau, qui est relié aussi bien à la partie inférieure (27) du couvercle (27, 28) qu'au fond (44).

21. Mélangeur d'évier sanitaire selon la revendication 20, caractérisé en ce que le logement (24) en forme de cartouche est constitué par des parties en matière synthétique soudées l'une à l'autre.

22. Mélangeur d'évier sanitaire selon l'une quelconque des revendications 1 à 21, caractérisé en ce que l'élément de réglage (22) est réalisé en forme arquée.

23. Mélangeur d'évier sanitaire selon la revendication 22, caractérisé en ce que l'élément de réglage (22) entoure, en tout ou en partie, le logement (24) en forme de cartouche.

24. Mélangeur d'évier sanitaire selon la revendication 22, caractérisé en ce que l'élément de réglage (22) est prévu dans le logement (24) en forme de cartouche.

25. Mélangeur d'évier sanitaire selon l'une quelconque des revendications 1 à 24, caractérisé en ce que l'élément de réglage (22) est un bimétal.

26. Mélangeur d'évier sanitaire selon l'une quelconque des revendications 1 à 25, caractérisé en ce que la tige de réglage (14), ses paliers (11, 53, 15), ainsi que le siège de soupape (8) sont constitués d'une matière céramique.

27. Mélangeur d'évier sanitaire selon la revendication 26, caractérisé en ce que la tige de réglage (14), ses paliers (11, 53, 15), ainsi que le siège de soupape (8) sont constitués d'oxyde d'aluminium.

28. Mélangeur d'évier sanitaire selon l'une quelconque des revendications 1 à 27, caractérisé en ce que la tige de réglage (14), ses paliers (11, 53, 15), ainsi que le siège de soupape (8) sont constitués par une matière synthétique thermoplastique ou duroplastique à teneur élevée en matière de charge.

29. Mélangeur d'évier sanitaire selon l'une quelconque des revendications 1 à 28, caractérisé en ce que la matière de charge est minérale.

30. Mélangeur d'évier sanitaire selon l'une quelconque des revendications 1 à 29, caractérisé en ce que, sur l'organe de commande (25), en dessous d'un recouvrement transparent (46) en forme de chapeau, se trouve une échelle de température (47) qui peut tourner avec l'organe de commande (25) en dessous d'une aiguille (49) servant de contre-repère et maintenue dans sa position à l'intervention d'un aimant sec (48).

31. Mélangeur d'évier sanitaire selon la revendication 30, caractérisé en ce que l'aimant sec (48) est maintenu contre le couvercle (28).

32. Mélangeur d'évier sanitaire selon la revendication 30, caractérisé en ce que le levier de commande (26) est entouré, dans sa zone supérieure, d'une douille (51) portant l'aimant sec (48), qui est maintenue en antirotation contre le couvercle (27, 28) et qui peut basculer avec le levier de commande (26).

33. Mélangeur d'évier sanitaire selon la revendication 32, caractérisé en ce que la douille (51) est maintenue en antirotation dans l'ouverture (50) du couvercle (27, 28) destinée au passage du levier de commande (26).

34. Mélangeur d'évier sanitaire selon l'une quelconque des revendications 1 à 33, caractérisé en ce que l'échelle de température se trouve sur le corps (41) du mélangeur d'évier ou sur une rosette de recouvrement (52), qui est prévue entre le corps (41) du mélangeur d'évier et l'organe de commande (25) qui présente le contre-repère.

35. Mélangeur d'évier sanitaire selon l'une quelconque des revendications 1 à 34, caractérisé en ce que l'échelle de température se trouve sur l'organe de commande (25) et le contre-repère se trouve sur le corps (41) du mélangeur d'évier ou sur la rosette de recouvrement (52).

36. Mélangeur d'évier sanitaire selon l'une quelconque des revendications 1 à 35, caractérisé en ce que le siège de soupape (8) est constitué d'un disque.

37. Mélangeur d'évier sanitaire selon l'une quelconque des revendications 1 à 36, caractérisé en ce que, sur l'organe de commande (25), se trouve un écran électronique qui transforme la position angulaire de l'organe de commande (25) en une valeur de consigne de température et qui l'affiche sous forme numérique.

38. Mélangeur d'évier sanitaire selon l'une quelconque des revendications 1 à 37, caractérisé en ce que le levier de commande (26), dans sa zone au-dessus du couvercle (27, 28), traverse un chapeau de recouvrement (45) qui est fixé au levier de commande, entoure ce dernier de manière étanche, recouvre au moins son palier (29) et est au moins apte à basculer avec le levier de commande (26).

39. Mélangeur d'évier sanitaire selon la revendication 38, caractérisé en ce que le chapeau de recouvrement (45) porte l'aimant sec (48).

40. Mélangeur d'évier sanitaire selon la revendication 38 ou 39, caractérisé en ce que le chapeau de recouvrement (45) est disposé en antirotation et est muni, à cet effet, d'une nervure de guidage (59) qui vient s'engrener dans une rainure de guidage (60) du couvercle (27, 28).

41. Mélangeur d'évier sanitaire selon l'une quelconque des revendications 1 à 40, caractérisé en ce que le chapeau de recouvrement (45) est réalisé en une seule pièce avec la douille (51).

42. Mélangeur d'évier sanitaire selon l'une quelconque des revendications 1 à 41, caractérisé en ce que les surfaces tournées l'une vers l'autre, entre la tige de réglage (14), le palier (11, 53, 15), ainsi que le siège de soupape (8) sont enduites d'une matière synthétique.

43. Mélangeur d'évier sanitaire selon la revendication 42, caractérisé en ce que les surfaces sont enduites avec du polytétrafluoréthylène.

44. Mélangeur d'évier sanitaire selon l'une quelconque des revendications 1 à 43, caractérisé en ce que les disques de guidage inférieur et supérieur (11, 15) sont munis d'évidements (55) dans lesquels viennent s'engrener des brides de fixation (54) qui fixent, dans leur position, des éléments d'écartement (53) entre les disques inférieur et supérieur de guidage (11, 15).

45. Mélangeur d'évier sanitaire selon la revendication 44, caractérisé en ce que les brides de fixation (54) sont constituées d'une matière synthétique.

46. Mélangeur d'évier sanitaire selon la revendication 44 ou 45, caractérisé en ce que les brides de fixation (54) traversent les évidements (55) pratiqués dans le disque de guidage supérieur (15) et sont reliées à demeure à la plaque de support (33).

47. Mélangeur d'évier sanitaire selon l'une quelconque des revendications 1 à 46, caractérisé en ce que les brides de fixation (54) traversent dans les évidements (55) pratiqués dans le disque de guidage inférieur, respectivement dans le disque de soupape (11), et présentent, sur leurs faces inférieures, des surfaces de guidage rectilignes (56) pour l'unité de fonctionnement et de construction du dispositif de réglage thermostatique et du dispositif de commande de l'arrêt et du débit, dans lequel les surfaces de guidage (56) coopèrent avec des surfaces de guidage correspondantes (57) sur le fond (44) du logement (24) en forme de cartouche.

48. Mélangeur d'évier sanitaire selon l'une quelconque des revendications 1 à 47, caractérisé en ce que les surfaces de guidage (57) sont réalisées contre une nervure périphérique (58) entourant de manière étanche le disque de siège de soupape (8), qui protège simultanément le disque de siège de soupape (8) contre la rotation.

49. Mélangeur d'évier sanitaire selon l'une quelconque des revendications 1 à 48, caractérisé en ce que les surfaces de guidage (56, 57) font partie d'un guidage en queue-d'aronde.

50. Mélangeur d'évier sanitaire selon l'une quelconque des revendications 1 à 49, caractérisé en ce que le disque de soupape, respectivement le disque de guidage inférieur (11), est réalisée en une seule pièce avec les éléments d'écartement (53) et le disque de guidage supérieur (15).
